(19) **Europäisches Patentamt**

**European Patent Office**

**Office européen des brevets**

(11) Veröffentlichungsnummer: **0 342 415**

**A2**

(12) # EUROPÄISCHE PATENTANMELDUNG

(21) Anmeldenummer: **89107750.5**

(22) Anmeldetag: **28.04.89**

(51) Int. Cl.4: **B01D 46/24 , F02N 3/02**

(30) Priorität: **17.05.88 DE 8806440 U**

(43) Veröffentlichungstag der Anmeldung:
**23.11.89 Patentblatt 89/47**

(84) Benannte Vertragsstaaten:
**AT BE CH DE ES FR GB GR IT LI LU NL SE**

(71) Anmelder: **Waschkuttis, Gerhard**
**Hauptstrasse 52**
**D-8551 Wiesenthau(DE)**

(72) Erfinder: **Waschkuttis, Gerhard**
**Hauptstrasse 52**
**D-8551 Wiesenthau(DE)**

(74) Vertreter: **Matschkur, Peter Dipl.-Phys.**
**Czowalla - Matschkur Patentanwälte Dr.**
**Kurt-Schumacher-Strasse 23**
**D-8500 Nürnberg 11(DE)**

(54) **Russfilter für Dieselfahrzeuge.**

(57) Rußfilter für Dieselfahrzeuge mit einem in einem Gehäuse mit vorzugsweise konischen Abgaszu- und -abführstutzen angeordneten Filterkörper mit einer Vielzahl zueinander paralleler Kanäle, die durch dünne Filterwandungen getrennt sind, wobei eine Hälfte der Kanäle (Rohgaskanäle) zum Abgaszuführstutzen und die andere Hälfte (Reingaskanäle) zum Abgasabführstutzen hin offen und zur jeweils anderen Seite abgeschlossen sind, wobei die Rohgaskanäle in eine Rußkammer einmünden, die mit einer verschließbaren Ruß-Auslaßöffnung versehen ist.

FIG. 1

EP 0 342 415 A2

## Rußfilter für Dieselfahrzeuge

Die Erfindung bezieht sich auf einen Rußfilter für Dieselfahrzeuge mit einem in einem Gehäuse mit vorzugsweise konischen Abgaszu- und -abführstutzen angeordneten Filterkörper mit einer Vielzahl zueinander paralleler Kanäle, die durch dünne Filterwandungen getrennt sind, wobei eine Hälfte der Kanäle (Rohgaskanäle) zum Abgaszuführstutzen und die andere Hälfte (Reingaskanäle) zum Abgasabführstutzen hin offen und zur anderen Seite abgeschlossen sind.

Derartige Rußfilter, die bereits in den unterschiedlichsten Ausführungsformen bekanntgeworden sind, zeigen alle die grundsätzliche Schwierigkeit, daß sich die Wandungen des Filterkörpers mit der Zeit durch den abgeschiedenen Ruß zusetzen und damit sich ein so hoher Gegendruck aufbaut, daß der Filter seine Wirksamkeit gar nicht mehr erfüllen kann. Aus diesem Grund müssen derartige Rußfilter grundsätzlich in Abständen wieder von den abgeschiedenen Rußteilchen befreit werden, was neben einer chemischen Reinigung der Filteroberfläche in der Praxis meist in der Weise erreicht wird, daß die Filtereinsätze abgebrannt werden.

Da dieses Abbrennen im allgemeinen nicht gleichzeitig während der Funktion des Rußfilters erfolgen kann, sondern nur bei Stillstand des Motors, und das Abbrennen darüber hinaus wegen der Gefahr einer Überhitzung des häufig aus keramischem Werkstoff bestehenden Rußfilters auch die Gefahr eines Bruchs und damit einer Zerstörung des gesamten Filters mit sich bringt, besteht das Bedürfnis nach einer verbesserten einfacheren und schonenderen Filterreinigung. Darüber hinaus ergibt sich die Schwierigkeit, daß selbst mit dem Abbrand des Rußes die Probleme mit sich zusetzenden Filterflächen und erhöhtem Gegendruck noch nicht beseitigt sind, da die übrigbleibenden Verunreinigungsteilchen (Asche) nach wie vor im Filter verbleiben und somit den Gasdurchtritt des Abgases von den Rohgaskanälen zu den Reingaskanälen behindern.

Der Erfindung liegt daher die Aufgabe zugrunde, einen Rußfilter der eingangs genannten Art so auszugestalten, daß ein einfacheres, schonenderes und auch wirksameres Reinigen des Filterkörpers möglich ist.

Zur Lösung dieser Aufgabe ist erfindungsgemäß vorgesehen, daß die Rohgaskanäle in eine Rußkammer einmünden, die mit einer verschließbaren Ruß-Auslaßöffnung versehen ist.

Während bei üblichen Rußfiltern der gattungsgemäßen Art die Rohgaskanäle am Ende des Filters einfach verschlossen waren, d.h. die Rohgaskanäle als Sackbohrungen ausgebildet waren (wie im übrigen auch die Reingaskanäle, bei denen allerdings die Öffnung auf der Auslaßseite und nicht der Abgaseintrittsseite angeordnet ist), ist bei dem erfindungsgemäßen Rußfilter der Verschluß nicht unmittelbar am Ende des Filterkörpers vorgesehen, sondern hinter alle Rohgaskanäle ist eine sog. Rußkammer geschaltet, die ihrerseits verschlossen werden kann, so daß wirkungsmäßig die Verhältnisse beim Arbeiten eines solchen Rußfilters die gleichen sind. Das Rohgas tritt in die Rohgaskanäle ein und muß die Wandungen zu den Reingaskanälen durchsetzen, da es ja durch die im Betrieb geschlossene Rußkammer nicht austreten kann. Beim Durchsetzen der Filterwandungen setzt sich der Ruß auf den Innenwänden der Rohgaskanäle ab. Das so von Ruß und anderen Feststoffverunreinigungen befreite Abgas gelangt über die Reingaskanäle in die stromabwärts vom Filter angeordnete Auspuffleitung und wird dort ausgestoßen. Das Vorsehen der erfindungsgemäßen Rußkammer hat aber den Vorteil, daß zum Reinigen der Rohgaskanäle im Bedarfsfall es lediglich eines Öffnens der Ruß-Auslaßöffnung der Rußkammer bedarf, damit die in den Kanälen auf den Wandungen sitzenden Rußpartikel durch das Abgas mitgerissen und ausgetragen werden. Dabei erfolgt selbstverständlich auch ein Austrag der Rußteilchen, die durch die Erschütterung und den Gasstrom von vornherein in die Rußkammer gelangt sind und die durch ihre Anordnung in dieser Rußkammer bereits ein verringertes Zusetzen der Filterflächen des Filterkörpers zur Folge hatten und damit eine längere Standzeit des Rußfilters zur Folge haben. Unter Standzeit versteht man dabei die Zeit, die der Filter mit ausreichender Wirksamkeit arbeitet, ehe durch das Zusetzen der Filterflächen mit Ruß der Gegendruck zu hoch wird.

Die Ausbildung einer erfindungsgemäßen Rußkammer läßt sich in Weiterbildung der Erfindung sehr vorteilhaft in der Weise erreichen, daß im Gehäuse in Abstand hinter dem Filterkörper eine, zusammen mit dem Filterkörper eine Zwischenkammer bildende Querwand vorgesehen ist, und daß die Reingas- oder Rohgaskanäle durch die Zwischenkammer durchsetzende Rohrstücke mit der Endkammer hinter der Querwand verbunden sind.

Dabei kann die Ausbildung entweder so getroffen sein, daß die Reingaskanäle in die mit der Auspuffleitung verbundene Endkammer einmünden und die Zwischenkammer die Rußkammer bildet, oder aber auch, daß die Rohgaskanäle über die Rohrstücke in die die Rußkammer bildende Endkammer einmünden und daß die Zwischenkammer mit einem, vorzugsweise seitlichen, Reingasauslaß versehen ist. Gegebenenfalls könnte bei der letzteren Ausbildungsform der Reingasauslaß für die Zwischenkammer auch in üblicher Weise koaxial zum meist zylindrischen Gehäuse ausgebildet sein und in diesem Fall koaxial innerhalb der Auslaßleitung der Rußkammer. Zu diesem Zweck müßten dann allerdings die die Rohgaskanäle mit der Endkammer verbindenden Rohrstücke zur Endkammer hin konisch nach außen gebündelt werden, um in der Mitte Platz für die Reingasauslaßleitung zu bilden, was in der Praxis doch bauliche Schwierigkeiten bereitet, insbesondere wenn sehr viele Kanäle und damit auch sehr viele Rohrstücke vorzusehen sind.

Die Ausbildung eines erfindungsgemäßen Rußfilters kann im einfachsten Fall so getroffen sein, daß hinter der Ruß-Auslaßöffnung ein Rußsack od. dgl. anschließbar ist, damit beim Ausblasen der Rohgaskanäle der Ruß sich in einem solchen, ähnlich einem Staubsaugerfilter ausgebildeten Rußsack sammelt und damit entfernt werden kann.

Darüber hinaus kann selbstverständlich aber der in den Rohgaskanälen sich absetzende Ruß auch in bekannter Weise ausgebrannt werden, wobei die erfindungsgemäß gegebene Möglichkeit eines direkten Durchzugs durch die Rohgaskanäle, die ja bei den bislang bekannten Sackkanälen nicht gegeben war, eine erhebliche Verbesserung des Ausbrennens mit sich bringt und insbesondere auch die Möglichkeit, daß jegliche Asche und sonstige Verunreinigungsteilchen ebenfalls mit ausgetragen werden und nicht innerhalb der Kanäle verbleiben.

Zum Austragen des Rußes durch Öffnen der Rußkammer kann schließlich auch vorgesehen sein, daß umschaltbar in einer Bypass-Leitung zwischen der Ruß-Auslaßöffnung und einer stromabwärtigen Stelle im Reingasauslaßrohr ein zweiter Rußfilter mit Rußabbrennvorrichtung eingeschaltet ist. Zum Reinigen des in die Motorabgasleitung eingeschalteten Hauptrußfilters wird die Rußauslaßöffnung der Rußkammer geöffnet und durch die Motorabgase der Ruß in den zweiten Rußfilter gebracht, wo er sich abscheidet. Anschließend wird - was ja nur eine sehr kurze Zeitdauer in Anspruch nimmt - die Ruß-Auslaßleitung wieder verschlossen, so daß der Motor ohne weiteres weiter in Betrieb bleiben kann. Das Abbrennen erfolgt dann nicht im eigentlichen Hauptrußfilter selbst, sondern in dem zweiten Rußfilter, in den der Ruß vorher eingeblasen worden war.

In der Praxis wird man meist den Rußfilter mit einer Abbrennvorrichtung versehen, wobei ein solcher Rußfilter mit Rußabbrennvorrichtung, die im Bereich des Abgaszuführstutzens angeordnete Luft- und Brennstoffzuführleitung und eine Zündvorrichtung enthält, gemäß einem weiteren Merkmal der vorliegenden Erfindung dadurch gekennzeichnet ist, daß der Abgaszuführstutzen doppelwandig als Brennstoff- und/oder Luft-Misch- und Verteilkammer ausgebildet ist, wobei die Innenwand mit einer Vielzahl rundum verteilter Brenneröffnungen versehen ist.

Während die Brennstoffzuführleitung, bevorzugt eine Gasleitung, nur die Außenwand des doppelwandigen Abgaszuführstutzens durchsetzt, um zu erreichen, daß der Brennstoff erst sich in der durch die Doppelwandigkeit gebildeten Misch- und Verteilkammer verteilt und somit ein gleichmäßiges Brennen über die gesamte Innenfläche und damit auch ein gleichmäßigeres Abbrennen des ihr gegenüberstehenden Filterkörpers stattfinden kann, durchsetzen die Luftzuführleitungen bevorzugt die Verteilkammer vollständig, wobei sie mit Einweg- oder Pulsairventilen versehen sind, so daß sie bei der Inbetriebnahme des Motors durch den Abgasdruck schließen, während bei abgeschaltetem Motor mit eingeschaltetem Brenner sie sich öffnen können, um Luft zuzuführen. Gegebenenfalls kann aber auch noch eine zusätzliche Druckluftleitung vorgesehen sein, um beim Abbrennen des Filters eine Verstärkung der Strömung durch den Filter hindurch zu erzielen.

Eine derartige Strömungserhöhung und damit ein verbessertes Abbrennen des Rußes auf dem Filterkörper läßt sich schließlich in weiterer Ausgestaltung der Erfindung auch dadurch erzielen, daß stromabwärts vom Filterkörper ein Gebläse zum Durchsaugen des Abgases angeordnet ist. Dieses Gebläse kann dabei entweder ein seitlich an die Abgasleitung angeschlossenes Sauggebläse umfassen, in welchem Fall auf das Ende der Auspuffleitung eine schwenkbare Verschlußklappe aufgebracht sein muß, damit beim Einschalten des Sauggebläses die Klappe schließt und nicht Luft für das Auspuffende nachgesaugt werden kann. Alternativ hierzu könnte aber auch ein stromabwärts geneigt in die Abgasleitung einmündendes Druckgebläse vorgesehen sein, da durch ein solches Druckgebläse, welches eine starke Luftströmung durch das Ende des Auspuffrohrs bewirkt, umgekehrt an der Einmündungsstelle ein statischer Unter druck entsteht, der wiederum zur erhöhten Ansaugung der Verbrennungsgase beim Abbrennen des Rußes auf dem Filterkörper sorgt, wodurch ein verbessertes saubereres Abbrennen und insbesondere auch ein schonenderes Abbrennen durch Aufrechterhaltung niedrigerer Temperaturen auf dem Filterkörper erreicht wird. Diese Maßnahmen der besonderen Ausbildung der Rußabbrennvorrichtung durch die doppelwandige Ausbildung des Abgaszuführstutzens sowie die Erzielung eines besseren Abbrandes durch das Durchsaugen der Verbrennungsgase mit Hilfe eines Saug- oder speziell angeordneten Druckgebläses lassen sich ersichtlich auch bei herkömmlich ausgebildeten Rußfiltern sehr vorteilhaft einsetzen. Bevorzugt ist aber in jedem Fall das Vorsehen einer gemeinsamen Rußkammer für die auslaßseitigen Enden der Rohgaskanäle, da hierdurch die Reinigung sehr viel einfacher ist und vor allen Dingen auch beim Abbrennen ein sehr viel schonenderes gleichmäßigeres Abbrennen stattfinden kann, als es innerhalb von einseitig geschlossenen Kanälen möglich ist, wo auch die Gefahr örtlicher Hitzeüberlastungen und damit eines Brechens und einer Zerstörung des Filterkörpers gegeben wäre.

Weitere Vorteile, Merkmale und Einzelheiten der Erfindung ergeben sich aus der nachfolgenden Beschreibung einiger Ausbildungsbeispiele sowie anhand der Zeichnung. Dabei zeigen:

Fig. 1 einen schematischen Schnitt durch einen erfindungsgemäßen Rußfilter mit in eine Rußkammer einmündenden Rohgaskanälen,

Fig. 2 eine vergrößerte Darstellung des Bereichs II in Fig. 1,

Fig. 3 einen schematischen Querschnitt längs der Linie III-III in Fig. 1,

Fig. 4 einen der Fig. 1 entsprechenden Schnitt durch eine abgewandelte Ausführungsform, bei der die Rußkammer die Endkammer des Filtergehäuses bildet,

Fig. 5 eine vergrößerte Wiedergabe des Details V in Fig. 4,

Fig. 6 einen Längsschnbitt durch einen Rußfilter mit Rußkammer und zusätzlichen Einrichtungen zur Vergleichmäßigung sowohl der Rußabscheidung als auch des Rußabbrandes,

Fig. 7 eine Stirnansicht der Anordnung nach Fig. 6 von links, wobei nicht alle einmündenden Anschlußleitungen und Bauteile mit eingezeichnet sind,

Fig. 8 einen Schnitt längs der gewinkelten Linie VIII-VIII in Fig. 7, und

Fig. 9 eine schematische Darstellung eines Doppelrußfilters, bei dem in Bypass-Schaltung an die Rußkammer des Hauptrußfilters ein zweiter Rußfilter angeschlossen ist.

Im metallischen Gehäuse 1 mit konischen Abgaszuführstutzen 2 und Abgasabführstutzen 3 ist ein Filterkörper 4 aus Metall oder Keramik vorgesehen, der eine Vielzahl von zueinander parallelen Kanälen enthält. Diese bilden zur einen Hälfte Rohgaskanäle 5, die zum Abgaszuführstutzen 2 hin offen und zur anderen Seite hin abgeschlossen sind und zur anderen Hälfte Reingaskanäle 6, die zum Abgaszuführstutzen hin geschlossen sind, jedoch zum Abgasabführstutzen 3 hin offen. Das in die Rohgaskanäle 5 eintretende Gas durchsetzt die dünnen Filterwandungen zu den benachbarten Reingaskanälen, wodurch sich der Ruß auf den Kanalwandungen niederschlägt.

Erfindungsgemäß sind nun die Rohgaskanäle nicht einfach am Ende abgeschlossen, so wie dies am anderen vorderen Ende die Reingaskanäle sind, sondern sie münden alle in eine Rußkammer 7 ein, die ihrerseits durch eine schematisch als Platte dargestellte Verschlußvorrichtung 8 abschließbar und bei Bedarf auch öffenbar ist. Im Betrieb ist die Abschließvorrichtung 8 so eingestellt, daß die Rußkammer 7 geschlossen ist, wodurch im Endeffekt die gleiche Wirkung erzielt ist, als wenn jeder der Rohgaskanäle einzeln am Ende verschlossen wäre. Im Endeffekt muß das Rohgas durch die dünnen Filterwände 10 in die Reingaskanäle, womit sich der Ruß abscheidet. Die erfindungsgemäße Rußkammer mit der verschließbaen Rußauslaßöffnung 11 bietet jedoch die Möglichkeit, bei einem Zusetzen der Rohgaskanäle diese über die Rußkammer hin auszublasen, indem die Verschlußvorrichtung 8 geöffnet wird, so daß der Abgasstrom den leichteren Weg geht und das bedeutet, er durchsetzt nicht die Filterwandungen 10, sondern durchströmt mit hoher Geschwindigkeit die Rohgaskanäle und reißt dabei die in diesen befindlichen Rußteilchen mit und trägt sie über die Ruß-Auslaßöffnung 11 aus, wobei die weitere Entsorgung weiter unten noch im einzelnen beschrieben werden soll. Das Vorsehen der angesprochenen Rußkammer 7 erfordert Rohrstücke 12 zur Verbindung der Reingaskanäle 6 mit dem Abführtutzen 3. Diese beidseits mit verjüngten Abschnitten versehenen Rohrstücke 12 werden einerseits in die Reingaskanäle eingesteckt und zum anderen in zu ihnen koaxial angeordnete Bohrungen der Querwand 13, die gemeinsam mit der rech ten Stirnkante des Filterkörpers 4 die Rußkammer 7 im Gehäuse 1 begrenzt.

Neben dem einfachen Austragen des Rußes durch Ausblasen bei einer Öffnung der Ruß-Auslaßöffnung (11) hat die erfindungsgemäße Rußkammer 7 auch erhebliche vorteilhafte Bedeutung beim Ausbrennen des Filterkörpers, um das auch bei einer solchen mechanischen zusätzlichen Reinigungswirkung nicht vollständig herumzukommen ist. Teilweise setzen sich die Rußteilchen so fest an der Wandung an, daß sie nicht einfach durch Ausblasen herausgebracht werden können, sondern abgebrannt werden müssen. Bei den erfindungsgemäß ja dann beidseits offenen Rohgaskanälen kann beim Abbrennen ein sehr viel rascheres Durchströmen erfolgen, so daß zum einen ein Austrag auch aller Ascheteilchen mit erfolgen kann und zum anderen sichergestellt werden kann, daß die Wandungen des Filterkörpers nicht so heiß werden, daß sie zerstört werden.

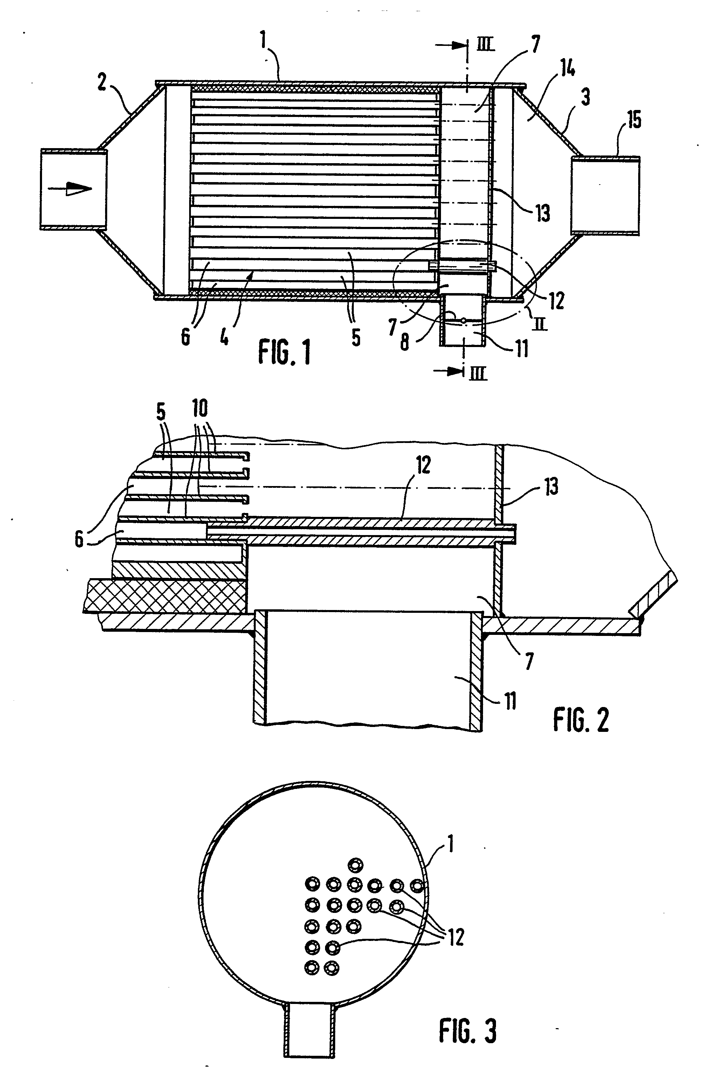

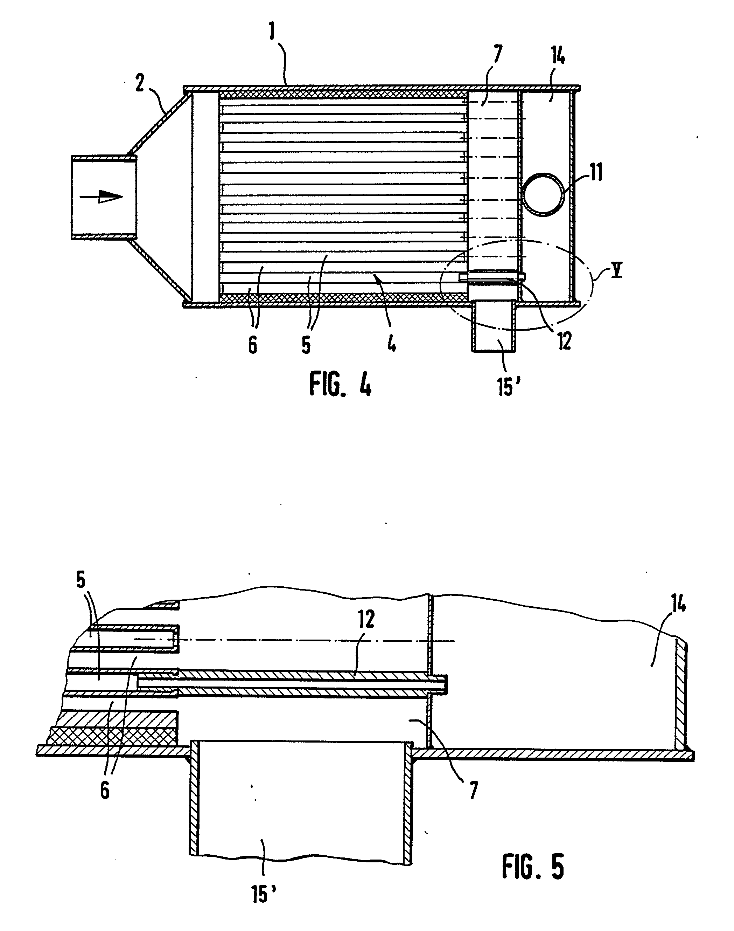

Im Gegensatz zum Ausführungsbeispiel nach den Figuren 1 bis 3 zeigen die Figuren 4 und 5 eine abgewandelte Ausführungsform, bei der nicht die zwischen dem Filterkörper 4 und der Querwand angeordnete Zwischenkammer die Rußkammer bildet, sondern die Endkammer 14 die Rußkammer bildet, während die Zwischenkammer 7 die gemeinsame Sammelkammer für die Reingaskanäle wird, so daß die Reingas-Auslaßöffnung 15, die in Fig. 1 koaxial zur Rohgas-Einlaßöffnung angeordnet war, nunmehr als seitlich angeordnete Auslaßöffnung 15' in Fig. 4 erscheint. Zu diesem Zweck sind beim Ausführungsbeispiel nach den Figuren 4 und 5 nicht die Reingasleitungen durch die aufgesetzten Rohrstücke 12 mit der Endkammer 14 verbunden, sondern statt dessen die Rohgaskanäle 5. Die Reingaskanäle 6 münden dagegen frei in die Zwischenkammer 7 aus.

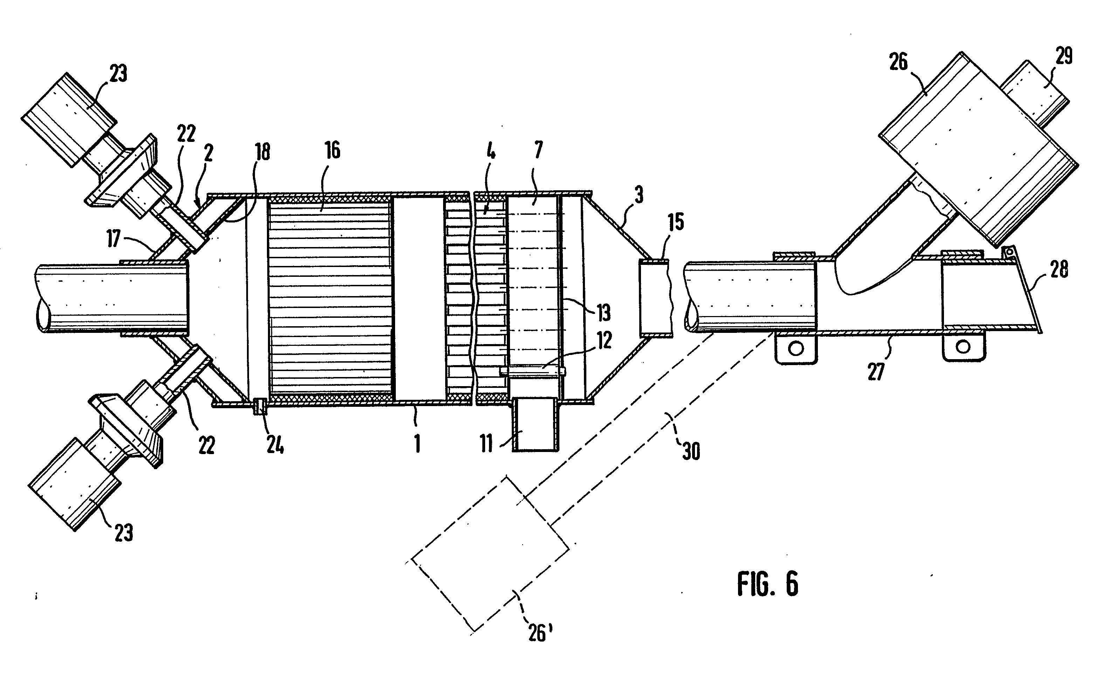

Die Fig. 6 zeigt einen erweiterten Aufbau, bei dem zusätzlich zum Vorsehen einer in diesem Fall die Zwischenkammer 7 bildenden Rußkammer mit einer seitlichen Ruß-Auslaßöffnung 11 vor dem Ruß-Filterkörper 4 noch ein bevorzugt als Wabenkatalysator ausgebildeter Gasdiffusor 16 angeordnet ist. Dieser dient einer gleichmäßigeren Verteilung der Abgase und damit einer gleichmäßigeren Beaufschlagung des Ruß-Filterkörpers 4. Gleichzeitig dient er durch die gleichmäßigere Verteilung auch einem besseren und gleichmäßigeren Abbrand des Rußes auf den Filterflächen.

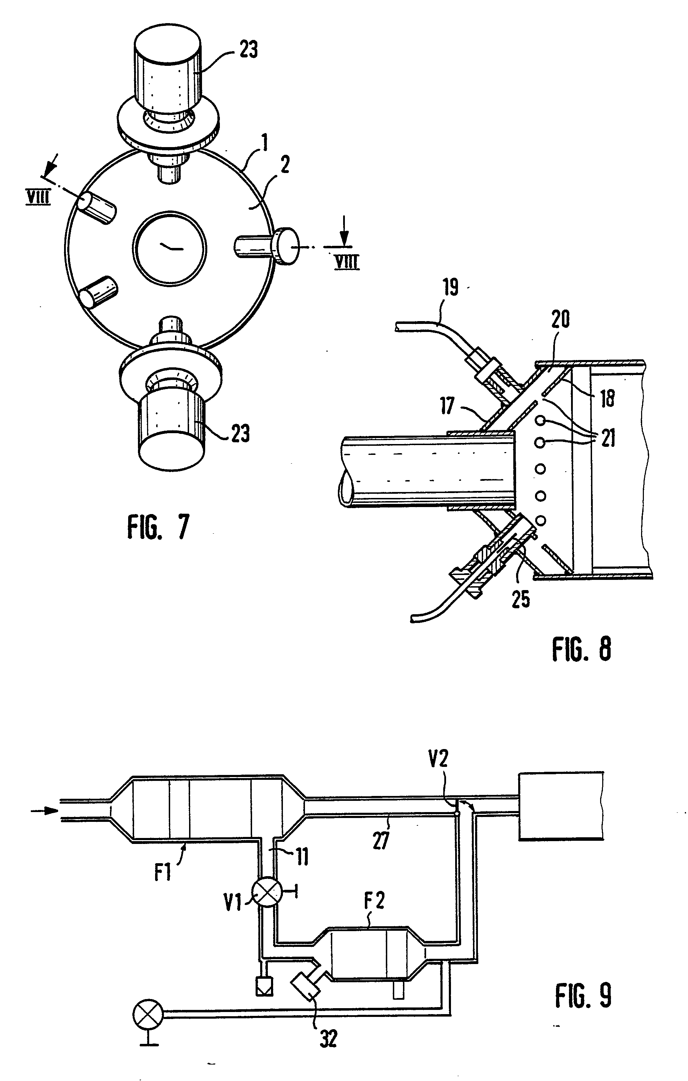

Darüber hinaus ist bei diesem Ausführungsbeispiel vorgesehen, daß der Abgaszuführstutzen 2 doppelwandig mit einem Außenkonus 17 und einem Innenkonus 18 ausgebildet ist. Die Brennstoffzuführung über die Brennstoffzuführleitung 19 erfolgt in den Zwischenraum zwischen den beiden Konusmantelflächen 17 und 18, so daß dieser Zwischenraum (vergl. insbesondere Fig. 8) eine Misch- und Verteilkammer 20 bildet, die über eine Vielzahl von Brenneröffnungen 21, die über den gesamten Umfang des inneren Konus 18 verteilt sind, eine gleichmäßige rundum angeordnete Flammenverteilung und damit ein gleichmäßiges Abbrennen bewirken. Obgleich in Sonderfällen auch die Luft in diese Verteilkammer 20 eingeleitet werden kann, ist im gezeigten Ausführungsbeispiel abweichend davon vorgesehen, daß die Luftzuführleitungen 22 mit aufgesetzten Puls-Air-Ventilen 23 den doppelwandigen Abgaszuführstutzen ganz durchsetzen. Die Puls-Air-Ventile dienen dazu, im normalen Motorbetrieb ein selbständiges Abschließen der Luftzuführöffnungen zu bewirken (Einweg-Ventile). Wird dagegen der Motor abgeschaltet und soll der Rußfilter ausgebrannt werden, so werden beim Zuführen des Brennstoffes und dem Zünden des Gemisches mit Hilfe einer schematisch angedeuteten Brennelektrode 24 durch den Zug des Brenngases durch den Rußfilter hindurch die Puls-Air-Ventile 23 geöffnet, so daß die notwendige Verbrennungsluft zur Verfügung steht.

Bei 25 ist schematisch ein Temperaturfühler dargestellt, der die Verbrennungstemperatur ermittelt, die zur Steuerung der Brennstoffzufuhr, insbesondere Gaszufuhr, und ggfs. auch dazu dienen kann, mehr oder weniger Druckluft in den Verbrennungsraum vor dem abzubrennenden Filter einzubringen.

Zur Unterstützung des Brenngasstroms beim Ausbrennen des Filterkörpers 4 durch den Filterkörper hindurch kann ein Sauggebläse 26 vorgesehen sein, welches seitlich an die Auspuffleitung 27 angeflanscht ist, wobei eine schwenkbar am Auspuffende angelenkte Klappe 28 im Abbrennfall den Auspuff schließt, so daß keine Fehlluft von rückwärts eingesaugt werden kann, sondern das Einsaugen tatsächlich durch den Filterkörper 4 hindurch erfolgt. Beim normalen Motorbetrieb ist das Gebläse 26 ausgeschaltet und somit der Auslaß 29 blockiert, so daß die Auspuffgase unter Nachoben-Schwenken der Klappe 28 normal über den Auspuff austreten können. Anstelle eines Sauggebläses könnte ggfs. auch, was in Fig. 6 strichliert angedeutet ist, ein Druckgebläse 26' verwendet werden, welches über eine stromabwärts geneigte Leitung 30 in das Auspuffrohr 27 einmündet und infolge der Strömungsgeschwindigkeit einen Unterdruck im Einmündungsbereich in das Auspuffrohr 27 bildet, der in gleicher Weise für ein besseres Durchsaugen durch den Filterkörper sorgt, wie ein Sauggebläse 26. Bei Verwenden eines solchen Druckgebläses mit besonderer Neigung der Einblasleitung 30 wäre im übrigen eine schwenkbar angelenkte Klappe 28 nicht erforderlich. Die Fig. 9 zeigt schließlich eine Tandemschaltung, bei der an den Rußablaß 11 des in der Motor auspuffleitung liegenden Haupt-Rußfilters F1 ein zweiter Rußfilter F2 angeschlossen ist, der über eine Wechselklappenanordnung V2 wieder an die Auspuffleitung 27 in Bypass-Schaltung angelegt ist. Bei geschlossenem Ventil V1, welches in diesem Fall die Verschlußvorrichtung 8 in Fig. 1 bildet, arbeitet die Vorrichtung gemäß Fig. 9 wie die Rußfiltervorrichtungen in den Figuren 1 bis 8, wobei ggfs. selbstverständlich auch die Gebläse vorgesehen sein können, die jedoch aus Übersichtlichkeitsgründen in Fig. 9 weggelassen worden sind. Zum Reinigen des Haupt-Rußfilters F1 wird das Ventil V1 geöffnet, wobei der Ruß nicht einfach ausgetragen wird, beispielsweise in einen Rußbeutel od.dgl., sondern in den zweiten Rußfilter F2 gelangt. Anschließend wird das Ventil V1 wieder geschlossen, so daß der Hauptrußfilter im Abgasstrom des Motors wieder normal funktioniert und demzufolge auch der Motor weiterlaufen kann, während nunmehr aber der Ruß ohne Beeinträchtigung der Motorfunktion im zweiten Rußfilter F2 mit Hilfe einer nur schematisch angedeuteten Abbrennvorrichtung 32 verbrannt wird, die Luftzuführleitung und Brennstoffzuführleitungen, Zünder usw. umfassen kann. Anstelle des Ableitens des Rußes aus dem Haupt-Rußfilter F1 über den zweiten Rußfilter F2 und der daraus resultierenden Möglichkeit des Abbrennes des Rußes während der Fahrt, kann der Rußfilter F1 selbstverständlich auch durch Absaugen gereinigt werden, was ja bereits mehrfach angesprochen worden ist.

Die Erfindung ist nicht auf das dargestellte Ausführungsbeispiel beschränkt. Neben der Möglichkeit des Vorsehens anderer Abbrennvorrichtungen (wobei ja eine Abbrennvorrichtung bei Vorsehen einer Rußkammer gar nicht unbedingt zwingend erforderlich ist), sowie der Möglichkeit der Verwendung anderer Konfigurationen von Ruß-Filterkörpern 4 wäre es beispielsweise in der Praxis auch zweckmäßig und möglich, anstelle von gesonderten Rohrstücken 12 vorzusehen, daß diese Verbindungsstücke 12, die die Zwischenkammer 7 durchsetzen, unmittelbar am Filterkörper 4 mit angeformt sind, was besonders einfach möglich ist, wenn dieser als Preßkörper aus keramischem Werkstoff hergestellt ist.

### Ansprüche

1. Rußfilter für Dieselfahrzeuge mit einem in einem Gehäuse mit vorzugsweise konischen Abgaszu- und -abführstutzen angeordneten Filterkörper mit einer Vielzahl zueinander paralleler Kanäle, die durch dünne Filterwandungen getrennt sind, wobei eine Hälfte der Kanäle (Rohgaskanäle) zum Abgaszuführstutzen und die andere Hälfte (Reingaskanäle) zum Abgasabführstutzen hin offen und zur jeweils anderen Seite abgeschlossen sind, dadurch gekennzeichnet, daß die Rohgaskanäle (5) in eine Rußkammer (7) einmünden, die mit einer verschließbaren Ruß-Auslaßöffnung versehen ist.

2. Rußfilter nach Anspruch 1, dadurch gekennzeichnet, daß im Gehäuse (1) in Abstand hinter dem Filterkörper (4) eine Querwand (13) vorgesehen ist und daß die Reingas- oder Rohgaskanäle (5, 6) durch die Zwischenkammer durchsetzende Rohrstücke mit der Endkammer (14) hinter der Querwand (13) verbunden sind.

3. Rußfilter nach Anspruch 2, dadurch gekennzeichnet, daß die Reingaskanäle (6) in die mit der Auspuffleitung (15) verbundene Endkammer einmünden und die Zwischenkammern die Rußkanäle (7) bilden.

4. Rußfilter nach Anspruch 2, dadurch gekennzeichnet, daß die Rohgaskanäle (5) über die Rohrstücke (12) in die die Rußkammer bildende Endkammer (14) einmünden und daß die Zwischenkammer (7) mit einem vorzugsweise seitlichen Reingas-Auslaß (15') versehen ist.

5. Rußfilter nach einem der Ansprüche 1 bis 4, dadurch gekennzeichnet, daß hinter der Ruß-Auslaßöffnung (11) ein Rußsack od. dgl. anschließbar ist.

6. Rußfilter mit Rußabbrennvorrichtung, insbesondere nach einem der Ansprüche 1 bis 5, gekennzeichnet durch eine im Bereich des Abgaszuführstutzens (2) angeordnete, mit Luft- und Brennstoff-Zuführleitungen und einer Zündvorrichtung versehene Rußabbrennvorrichtung.

7. Rußfilter nach einem der Ansprüche 1 bis 6, dadurch gekennzeichnet, daß umschaltbar in einer Bypass-Leitung zwischen der Ruß-Auslaßöffnung (11) und einer stromabwärtigen Stelle im Reingasauslaßrohr (27) ein zweiter Rußfilter (F2) mit Rußabbrennvorrichtung (32) eingeschaltet ist.

8. Rußfilter nach Anspruch 6 oder 7, dadurch gekennzeichnet, daß der Abgaszuführstutzen doppelwandig als Brennstoff- und/oder Luft-Misch- und -Verteilkammer ausgebildet ist, wobei die Innenwand (8) mit einer Vielzahl von rundum verteilten Brenneröffnungen (21) versehen ist.

9. Rußfilter nach Anspruch 8, dadurch gekennzeichnet, daß die, die Verteilkammer bevorzugt durchsetzenden, Luftzuführleitungen (22) mit Puls-Air-Ventilen (23) versehen sind.

10. Rußfilter mit einer Rußabbrennvorrichtung, vorzugsweise nach einem der Ansprüche 1 bis 9, dadurch gekennzeichnet, daß stromabwärts vom Filterkörper (4) ein Gebläse zum Durchsaugen der Gase durch den Filterkörper angeordnet ist.

11. Rußfilter nach Anspruch 10, gekennzeichnet durch ein seitlich an die Abgasleitung angeschlossenes Sauggebläse (26).

12. Rußfilter nach Anspruch 10, gekennzeichnet durch ein stromabwärts geneigt in die Abgasleitung (27) einmündendes Druckgebläse (26').

13. Rußfilter nach einem der Ansprüche 1 bis 12, gekennzeichnet durch einen Gasdiffusor, vorzugsweise in Form eines Wabenkatalysators (16).

FIG. 1

FIG. 2

FIG. 3

FIG. 4

FIG. 5

FIG. 6

EP 0 342 415 A2

FIG. 7

FIG. 8

FIG. 9